# EUROPEAN PATENT APPLICATION

(11) **EP 4 615 098 A1**
(43) Date of publication of application: **10.09.2025**
(21) Application number: 23884811.3
(22) Date of filing: 30.10.2023
(51) Int. Cl.: H04W 72/0446

(54) **METHOD AND DEVICE USED IN NODE FOR WIRELESS COMMUNICATION**

(30) Priority: 03.11.2022 CN 202211371576
(71) Applicant: Apogee Networks, LLC, Dallas, TX 75201 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2023/127592
(87) International publication number: WO 2024/093880

(57) **Abstract**

The present application discloses a method and device used in a node for wireless communication. A first node receives a first information block, receives first signaling, and sends a first bit block in a first time window, or foregoes sending the first bit block in the first time window. The first information block is used for determining a reference time domain resource set, the first signaling is used for determining the first time window, and the first time window belongs to the reference time domain resource set; whether the first bit block is sent in the first time window depends on the type of a physical channel carrying the first bit block; when the type of the physical channel carrying the first bit block is a first type, the first bit block is sent in the first time window; and when the type of the physical channel carrying the first bit block is a second type, the sending of the first bit block is foregone in the first time window.

## Description

### Technical Field

The present application relates to a transmission method and apparatus for a wireless communication system, especially a transmission method and apparatus for wireless signals in a wireless communication system supporting a cellular network.

### Background Art

In the existing NR (New Radio) system, spectrum resources are statically divided into an FDD (Frequency Division Duplexing) spectrum and a TDD (Time Division Duplexing) spectrum. For the TDD spectrum, a base station and user equipment are both operated in a half-duplex mode. This half-duplex mode avoids a self-interference and can alleviate the impact of a cross-link interference, but it also brings about a decrease in resource utilization rate and an increase in latency. In view of these problems, supporting a flexible duplex mode on the TDD spectrum or the FDD spectrum has become a possible solution. At the 3GPP RAN (Radio Access Network) 1 #103e meeting, research on a duplex technology was agreed. Therein, subband nonoverlapping full duplex was proposed, i.e., a base station device is supported to simultaneously perform sending and receiving on two subbands. Communications under this mode will suffer from serious interferences, including the self-interference and the cross-link interference.

### Summary of the Invention

The inventor found through research that how to determine time domain resources occupied by one transmission is a key issue.

In view of the above-mentioned problem, the present application discloses a solution. It should be explained that in the description of the present application, the flexible duplex mode is only used as a typical application scenario or example; and the present application can also be applied to application scenarios under a half-duplex mode. Further, the use of a unified design solution for different scenarios (including but not limited to SBFD, other flexible duplex modes or full-duplex modes, variable link direction modes, traditional duplex modes, half-duplex modes, etc.) can also facilitate the reduction of hardware complexity and costs. In the absence of conflicts, the embodiments in any node of the present application and the features in the embodiments can be applied to any other node. In the absence of conflicts, the embodiments of the present application and the features in the embodiments can be arbitrarily combined with each other.

As one embodiment, the interpretation of the terminologies in the present application refers to the definition of the 3GPP specification protocol TS36 series.

As one embodiment, the interpretation of the terminologies in the present application refers to the definition of the 3GPP standard protocol TS38 series.

As one embodiment, the interpretation of the terminologies in the present application refers to the definition of the 3GPP standard protocol TS37 series.

As one embodiment, the interpretation of the terminologies in the present application refers to the definition of the standard protocol of the IEEE (Institute of Electrical and Electronics Engineers).

The present application discloses a method used in a first node for wireless communication, comprising:
receiving a first information block; receiving first signaling, and
sending a first bit block in a first time window, or foregoing sending the first bit block in the first time window,
wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, the problem to be solved by the present application comprises: how to determine the time domain resources occupied by one transmission.

According to one aspect of the present application, it is characterized in that the physical channel carrying the first bit block is a PUSCH, the first type is type B or applies transport block processing over multiple slots, and the second type is type A; symbol positions occupied by a PUSCH of type A on each slot of multiple slots are the same; a PUSCH of type B is allocated with one or more nominal repetitions; and in a PUSCH applying transport block processing over multiple slots, a transport block size is determined according to sizes of time-frequency resources in the multiple slots.

According to one aspect of the present application, it is characterized in that at least one symbol in the reference time domain resource set is configured as a DL symbol by a higher layer parameter.

According to one aspect of the present application, it is characterized in that the first signaling is used for determining a first time pool, the first time pool comprises N time windows, the first time window is any time window of the N time windows, and N is a positive integer greater than 1.

According to one aspect of the present application, it is characterized in that when the type of the physical channel carrying the first bit block is the first type, the first bit block is sent in a first time sub-window group in the first time pool, a reference symbol group is used for determining the first time sub-window group, and the reference symbol group depends on whether the first time pool overlaps the reference time domain resource set.

According to one aspect of the present application, it is characterized in that the reference symbol group is used for determining a target symbol group in the first time pool, and the first time sub-window group comprises parts or all of symbols outside the target symbol group in the first time pool.

According to one aspect of the present application, it is characterized in that the first signaling is used for determining the type of the physical channel carrying the first bit block.

The present application discloses a method used in a second node for wireless communication, comprising:
sending a first information block; sending first signaling; and
receiving a first bit block in a first time window, or foregoing receiving the first bit block in the first time window,
wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

According to one aspect of the present application, it is characterized in that the physical channel carrying the first bit block is a PUSCH, the first type is type B or applies transport block processing over multiple slots, and the second type is type A; symbol positions occupied by a PUSCH of type A on each slot of multiple slots are the same; a PUSCH of type B is allocated with one or more nominal repetitions; and in a PUSCH applying transport block processing over multiple slots, a transport block size is determined according to sizes of time-frequency resources in the multiple slots.

According to one aspect of the present application, it is characterized in that at least one symbol in the reference time domain resource set is configured as a DL symbol by a higher layer parameter.

According to one aspect of the present application, it is characterized in that the first signaling is used for determining a first time pool, the first time pool comprises N time windows, the first time window is any time window of the N time windows, and N is a positive integer greater than 1.

According to one aspect of the present application, it is characterized in that when the type of the physical channel carrying the first bit block is the first type, the first bit block is sent in a first time sub-window group in the first time pool, a reference symbol group is used for determining the first time sub-window group, and the reference symbol group depends on whether the first time pool overlaps the reference time domain resource set.

According to one aspect of the present application, it is characterized in that the reference symbol group is used for determining a target symbol group in the first time pool, and the first time sub-window group comprises parts or all of symbols outside the target symbol group in the first time pool.

According to one aspect of the present application, it is characterized in that the first signaling is used for determining the type of the physical channel carrying the first bit block.

The present application discloses a first node device used in wireless communication, comprising:
a first receiver for receiving a first information block, and receiving first signaling, and
a first transmitter for sending a first bit block in a first time window, or foregoing sending the first bit block in the first time window,
wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

The present application discloses a second node device used in wireless communication, comprising:
a second transmitter for sending a first information block, and sending first signaling; and
a second receiver for receiving a first bit block in a first time window, or foregoing receiving the first bit block in the first time window,
wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, compared with a traditional solution, the present application has the following advantages:
- when determining time domain resources occupied by an actual transmission, different application scenarios are considered, such as different duplex modes, different interference environments, different antennas, different spatial characteristics, etc.

### Brief Description of the Drawings

Other features, purposes, and advantages of the present application will become more apparent by reading the detailed description of the non-limiting embodiments with reference to the following figures:
FIG. 1 shows a flow chart of a first information block, first signaling and a first bit block according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a flow chart of a transmission according to one embodiment of the present application;
FIGS. 6A-6C respectively show a schematic diagram of a first type and a second type according to one embodiment of the present application;
FIG. 7 shows a schematic diagram of a first type and a second type according to another embodiment of the present application;
FIG. 8 shows a schematic diagram of a reference time domain resource set according to one embodiment of the present application;
FIG. 9 shows a schematic diagram of a reference time domain resource set according to another embodiment of the present application;
FIG. 10 shows a schematic diagram of a reference time domain resource set according to another embodiment of the present application;
FIG. 11 shows a schematic diagram of a first time pool according to one embodiment of the present application;
FIG. 12 shows a schematic diagram of a reference symbol group according to one embodiment of the present application;
FIGS. 13A-13B respectively show a schematic diagram of a first time sub-window group according to one embodiment of the present application;
FIG. 14 shows a schematic diagram of a relationship between first signaling and a type of a physical channel carrying a first bit block according to one embodiment of the present application;
FIG. 15 shows a structural block diagram of a processing device for use in a first node device according to one embodiment of the present application; and
FIG. 16 shows a structural block diagram of a processing device for use in a second node device according to one embodiment of the present application.

### Detailed Description of Embodiments

The technical solution of the present application will be further described in detail below in conjunction with the accompanying drawings. It should be explained that in the absence of conflicts, the embodiments in the present application and the features in the embodiments can be arbitrarily combined with each other.

**Embodiment 1**

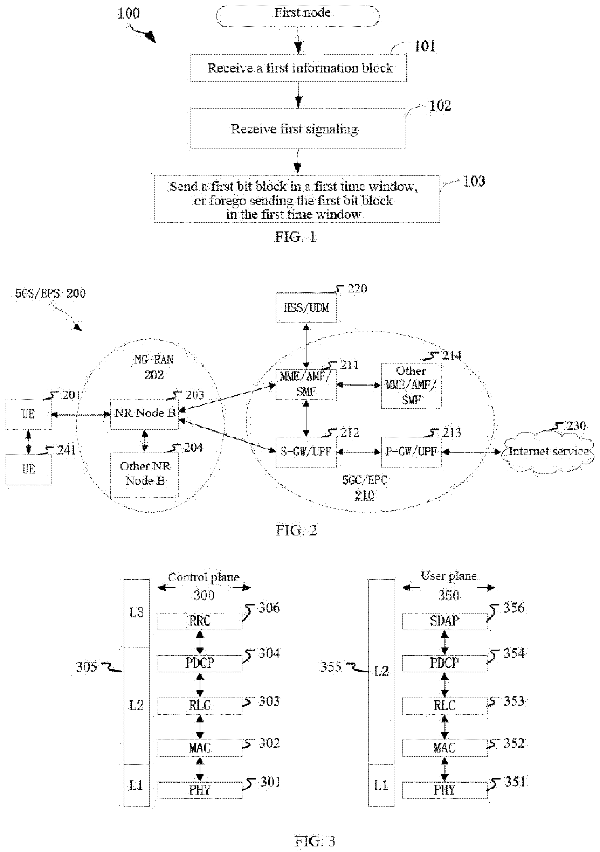

Embodiment 1 illustrates a flow chart of a first information block, first signaling and a first bit block according to one embodiment of the present application, as shown in FIG. 1. In 100 shown in FIG. 1, each block represents one step.

In Embodiment 1, a first node in the present application receives a first information block in step 101, receives first signaling in step 102, and sends a first bit block in a first time window in step 103, or foregoes sending the first bit block in the first time window, wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, the first signaling and the first information block are carried by the same signaling.

As one embodiment, the first signaling and the first information block are carried by different signaling.

As one embodiment, the first signaling is received earlier than the first information block.

As one embodiment, the first signaling is received later than the first information block.

As one embodiment, the first signaling is received no earlier than the first information block.

As one embodiment, the first signaling and the first information block are received simultaneously.

As one embodiment, the reference time domain resource set is configured to a serving cell where the physical channel carrying the first bit block is located.

As one embodiment, the reference time domain resource set is configured to a BWP (BandWidth Part) where the physical channel carrying the first bit block is located.

As one embodiment, the reference time domain resource set is configured to a DL (DownLink) BWP corresponding to an uplink BWP where the physical channel carrying the first bit block is located.

As one embodiment, the BWP where the physical channel carrying the first bit block is located is one uplink BWP.

As one embodiment, the first information block is carried by higher layer signaling.

As one embodiment, the first information block is carried by RRC (Radio Resource Control) signaling.

As one embodiment, the first information block comprises all or parts of fields in one RRC IE (Information Element).

As one embodiment, the first information block comprises all or parts of fields in each RRC IE of a plurality of RRC IEs.

As one embodiment, the first information block comprises all or parts of fields in a TDD-UL-DL-ConfigCommon IE.

As one embodiment, the first information block comprises all or parts of fields in a TDD-UL-DL-ConfigDedicated IE.

As one embodiment, the first information block comprises all or parts of fields in a ServingCellConfig IE.

As one embodiment, the first information block comprises all or parts of fields in a ServingCellConfigCommonSIB IE.

As one embodiment, the first information block comprises information in all or parts of fields in a ServingCellConfigCommon IE.

As one embodiment, the first information block is carried by at least one RRC IE.

As one embodiment, the name of one IE carrying the first information block comprises TDD-UL-DL-Config.

As one embodiment, the name of one IE carrying the first information block comprises ServingCellConfig.

As one embodiment, the first information block is carried by a MAC CE (Medium Access Control Layer Control Element).

As one embodiment, the first information block comprises a MAC CE.

As one embodiment, the first information block is transmitted on a downlink physical layer data channel (i.e., a downlink channel that can be used for carrying physical layer data).

As one embodiment, the first information block is transmitted on a PDSCH.

As one embodiment, the first information block is carried by DCI (Downlink control information).

As one embodiment, the first information block comprises DCI.

As one embodiment, the first information block comprises one or more fields in DCI.

As one embodiment, the first information block is carried by DCI format 2_0.

As one embodiment, the first information block comprises DCI format 2_0.

As one embodiment, the first information block is carried by the RRC signaling and the MAC CE.

As one embodiment, the first information block is carried by higher layer signaling and the DCI.

As one embodiment, the first information block is used for indicating the reference time domain resource set.

As one embodiment, the first information block explicitly indicates the reference time domain resource set.

As one embodiment, the first information block implicitly indicates the reference time domain resource set.

As one embodiment, the first information block indicates a period and a time offset of the reference time domain resource set.

As one embodiment, the first information block indicates the time domain resources included in one period of the reference time domain resource set.

As one embodiment, the first information block indicates the symbols included in one period of the reference time domain resource set.

As one embodiment, the first information block indicates the slots included in one period of the reference time domain resource set.

As one embodiment, a sender of the first signaling supports simultaneous reception and transmission of wireless signals in the reference time domain resource set.

As one embodiment, a sender of the first signaling simultaneously receives and transmits wireless signals in the reference time domain resource set.

As one embodiment, the reference time domain resource set comprises a positive integer number of symbols.

As one embodiment, the reference time domain resource set comprises one or more symbols.

As one embodiment, the reference time domain resource set comprises one symbol.

As one embodiment, the reference time domain resource set comprises a plurality of symbols.

As one embodiment, the reference time domain resource set comprises at least one slot.

As one embodiment, the reference time domain resource set comprises at least one subframe.

As one embodiment, the symbol is a single carrier symbol.

As one embodiment, the symbol is a multi-carrier symbol.

As one embodiment, the multi-carrier symbol is an OFDM (Orthogonal Frequency Division Multiplexing) symbol.

As one embodiment, the symbol is obtained after OFDM symbol generation of an output of transform precoding.

As one embodiment, the multi-carrier symbol is an SC-FDMA (Single Carrier-Frequency Division Multiple Access) symbol.

As one embodiment, the multi-carrier symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, the reference time domain resource set comprises only the first time window.

As one embodiment, the reference time domain resource set also comprises time domain resources outside the first time window.

As one embodiment, the first signaling is used for indicating the first time window.

As one embodiment, the first signaling explicitly indicates the first time window.

As one embodiment, the first signaling implicitly indicates the first time window.

As one embodiment, the first signaling comprises a first domain, the first domain in the first signaling indicates the first time window, and the first domain comprises at least one bit.

As one sub-embodiment of the above-mentioned embodiment, the first domain in the first signaling comprises a start symbol of the first time window and the total number of symbols included in the first time window.

As one sub-embodiment of the above-mentioned embodiment, the first domain in the first signaling comprises a start moment of the first time window and the duration of the first time window.

As one embodiment, the first domain comprises more than one bit.

As one embodiment, the first domain comprises only one bit.

As one embodiment, the number of bits included in the first domain is configured by a higher layer parameter.

As one embodiment, the first domain is a time domain resource assignment field.

As one embodiment, for the specific definition of the time domain resource assignment field, refer to Section 7.3.1 of 3GPP TS 38.212.

As one embodiment, the first signaling comprises the first domain, a second domain comprises at least one bit, the second domain in the first signaling indicates the time-frequency resources occupied by the physical channel carrying the first bit block, and the first time window comprises the time domain resources occupied by the physical channel carrying the first bit block.

As one embodiment, the second domain is a PUCCH resource indicator field.

As one embodiment, for the specific definition of the PUCCH resource indicator field, refer to Section 7.3 of 3GPP TS38.212.

As one embodiment, the higher layer signaling comprises RRC signaling.

As one embodiment, the higher layer signaling comprises MAC CE signaling.

As one embodiment, the higher layer parameter is an RRC parameter.

As one embodiment, the higher layer parameter is a MAC CE parameter.

As one embodiment, the sending of the first bit block occupies parts of the time domain resources in the first time window.

As one embodiment, the sending of the first bit block occupies all the time domain resources in the first time window.

As one embodiment, when the first bit block is sent in the first time window, the first time window comprises at least one time sub-window, and the first bit block is sent in only the at least one time sub-window in the first time window.

As one sub-embodiment of the above-mentioned embodiment, the first time window is the at least one time sub-window.

As one sub-embodiment of the above-mentioned embodiment, the first time window also comprises time domain resources outside the at least one time sub-window.

As one sub-embodiment of the above-mentioned embodiment, any time sub-window in the first time window is used for transmitting one repetition of the first bit block.

As one sub-embodiment of the above-mentioned embodiment, the first time window comprises K1 time sub-windows, and the K1 time sub-windows are jointly used for transmitting one repetition of the first bit block.

As one sub-embodiment of the above-mentioned embodiment, the first time window comprises K1 time sub-windows, and the K1 time sub-windows are respectively used for transmitting K1 repetitions of the first bit block.

As one sub-embodiment of the above-mentioned embodiment, the first time window comprises only one time sub-window, and the only one time sub-window is used for transmitting one repetition of the first bit block.

As one embodiment, when the first bit block is sent in the first time window, the first time window comprises at least one time sub-window, and one time sub-window is used for transmitting one repetition of the first bit block.

As one embodiment, when the first bit block is sent in the first time window, the first time window comprises at least one time sub-window in a first time sub-window group.

As one embodiment, when the sending of the first bit block is foregone in the first time window, the first time window does not comprise any time sub-window in the first time sub-window group.

As one embodiment, when the sending of the first bit block is foregone in the first time window, the first time window does not comprise the time domain resources in the first time sub-window group.

As one embodiment, the first signaling is physical layer signaling.

As one embodiment, the first signaling is the DCI (Downlink Control Information) signaling.

As one embodiment, the first signaling is uplink DCI signaling.

As one embodiment, the first signaling is the DCI signaling for scheduling the PUSCH, and the physical channel carrying the first bit block is the PUSCH.

As one embodiment, the first signaling is used for configuring or scheduling the PUSCH, and the physical channel carrying the first bit block is the PUSCH.

As one embodiment, the first signaling is downlink DCI signaling.

As one embodiment, the first signaling is the DCI signaling for scheduling the PDSCH, and the physical channel carrying the first bit block is the PUCCH.

As one embodiment, the first signaling is used for configuring or scheduling the PDSCH, and the physical channel carrying the first bit block is the PUCCH.

As one embodiment, the physical channel carrying the first bit block is the PUSCH, and the first bit block comprises one transport block (TB).

As one embodiment, the physical channel carrying the first bit block is the PUSCH, and the first bit block comprises at least one transport block (TB).

As one embodiment, the physical channel carrying the first bit block is the PUSCH, and the first bit block comprises at least one CBG (Code Block Group).

As one embodiment, the physical channel carrying the first bit block is the PUCCH, and the first bit block comprises UCI (Uplink Control Information).

As one embodiment, the physical channel carrying the first bit block is the PUCCH, and the first bit block comprises HARQ-ACK (Hybrid Automatic Repeat request-ACKnowledge).

As one embodiment, the physical channel carrying the first bit block is the PUCCH, and the first bit block comprises CSI (Channel State Information).

As one embodiment, the physical channel carrying the first bit block is the PUCCH, and the first bit block comprises at least one of HARQ-ACK or CSI.

As one embodiment, the physical channel carrying the first bit block is the PUSCH, and the first signaling comprises scheduling information of the physical channel carrying the first bit block.

As one embodiment, the scheduling information of the physical channel of the first bit block comprises one or more of the time domain resource, the frequency domain resource, an MCS, a DMRS (DeModulation Reference Signals) port, an HARQ (Hybrid Automatic Repeat request) process number, an RV (Redundancy Version), an NDI (New Data Indicator), a TCI (Transmission Configuration Indicator) state or an SRI (Sounding reference signal Resource Indicator).

As one embodiment, the first signaling is used for configuring or scheduling a configured grant PUSCH, and the physical channel carrying the first bit block is the PUSCH.

As one embodiment, the first signaling is used for configuring or scheduling a configured grant PUSCH, and the physical channel carrying the first bit block is one configured grant PUSCH.

As one embodiment, the first signaling is used for configuring or scheduling the configured grant PUSCH, and the first time window is reserved for one configured grant PUSCH.

As one embodiment, the first signaling is used for configuring or scheduling the configured grant PUSCH, N time windows are reserved for one configured grant PUSCH, and the first time window is one of the N time windows.

As one embodiment, a target RB (Resource Block) set is used for transmitting the first bit block in the first time window, and the target RB set belongs to a reference RB set.

As one embodiment, the target RB set is used for transmitting the first bit block in the first time window, and the target RB set is a second RB set.

As one embodiment, the first signaling indicates a first RB set; The target RB set comprises at least one RB in the first RB set that belongs to the reference RB set.

As one embodiment, the reference RB set is configured for a UL transmission on the reference time domain resource set.

As one embodiment, the uplink transmission of a sender of the first signaling in the reference time domain resource set in a serving cell where a physical channel carrying a first bit block is located belongs to the reference RB set in the frequency domain.

As one embodiment, in a serving cell where a physical channel carrying a first bit block is located, in the reference time domain resource set, the reference RB set is used by a sender of the first signaling for sending the wireless signal.

As one embodiment, the uplink transmission of a sender of the first signaling in the reference time domain resource set in the BWP where the physical channel carrying the first bit block is located belongs to the reference RB set in the frequency domain.

As one embodiment, in the BWP where the physical channel carrying the first bit block is located, in the reference time domain resource set, the reference RB set is used by a sender of the first signaling for sending the wireless signal.

### Embodiment 2

Embodiment 2 illustrates a schematic diagram of a network architecture according to one embodiment of the present application, as shown in FIG. 2.

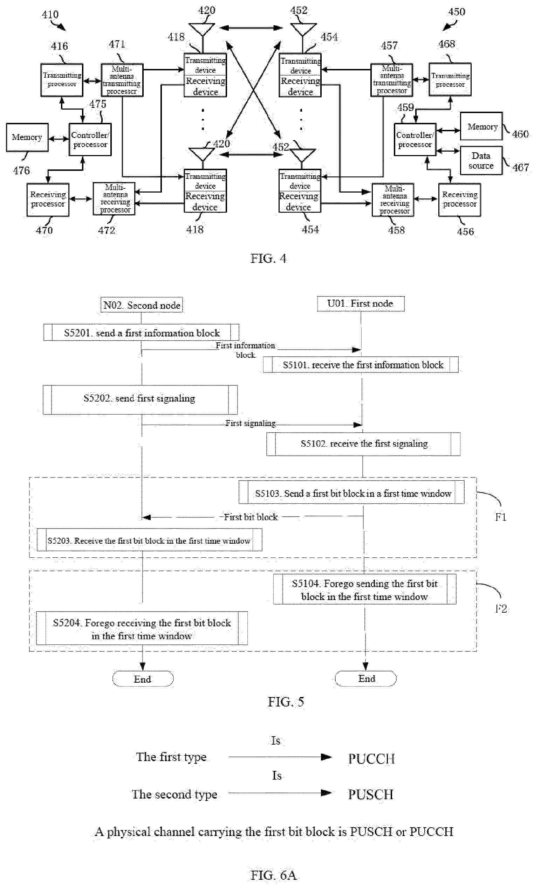

FIG. 2 illustrates a network architecture 200 of LTE (Long-Term Evolution), LTE-A (Long-Term Evolution Advanced) and future 5G systems. The network architecture 200 of LTE, LTE-A and future 5G systems is referred to an EPS (Evolved Packet System) 200. The 5G NR or LTE network architecture 200 may be referred to as a 5GS (5G System)/EPS (Evolved Packet System) 200 or some other suitable terms. The 5GS/EPS 200 may comprise one or more pieces of UE (User Equipment) 201, one piece of UE241 communicating with the UE201 via a sidelink, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. 5GS/EPS200 can be interconnected with other access networks, but for simplicity, these entities/interfaces are not shown. As shown in FIG. 2, 5GS/EPS200 provides a packet switching service, but those skilled the art will easily understand that the various concepts presented throughout the present application can be extended to a network that provides a circuit switching service. NG-RAN202 comprises an NR (New Radio) node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (transmission reception point), or some other suitable terms. The gNB203 provides an access point to 5GC/EPC210 for UE201. Examples of UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatus. Those skilled in the art may also call the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to 5GC/EPC210 by an S1/NG interface. 5GC/EPC210 comprises an MME (Mobility Management Entity)/AMF (Authentication Management Field)/SMF (Session Management Function) 211, other MME/AMF/SMF214, S-GW (Service Gateway)/UPF (User Plane Function) 212, and a P-GW (Packet Data Network Gateway)/UPF213. The MME/AMF/SMF211 is a control node that processes signaling between UE201 and 5GC/EPC210. Generally, the MME/AMF/SMF211 provides bearer and connection management. All user IP (Internet Protocol) packets are communicated by the S-GW/UPF212, and the S-GW/UPF212 is itself connected to P-GW/UPF213. The P-GW provides UE IP address allocation and other functions. The P-GW/UPF213 is connected to the Internet service 230. The Internet service 230 comprises an Internet protocol service corresponding to an operator, which may specifically comprise the Internet, the intranet, an IMS (IP Multimedia Subsystem), and a packet switching service.

As one embodiment, the first node in the present application comprises the UE201.

As one embodiment, the first node in the present application comprises the UE241.

As one embodiment, the second node in the present application comprises the gNB203.

### Embodiment 3

Embodiment 3 illustrates a schematic diagram of an embodiment of radio protocol architectures for a user plane and a control plane according to one embodiment of the present application, as shown in FIG. 3.

Embodiment 3 shows a schematic diagram of an embodiment of radio protocol architectures for one user plane and one control plane according to the present application, as shown in FIG. 3. FIG. 3 is a schematic diagram illustrating an embodiment of radio protocol architectures for a user plane 350 and a control plane 300, and FIG. 3 exhibits the radio protocol architecture for the control plane 300 between a first communication node device (UE, gNB, or RSU in V2X) and a second communication node device (gNB, UE, or RSU in V2X) or between two pieces of UE by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is above PHY301 and is responsible for the link between the first communication node device and the second communication node device or between two pieces of UE. The L2 layer 305 comprises a MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearer and logical channels. The PDCP sublayer 304 also provides security by encrypting data packets, and provides zone-crossing mobility support between the second communication node devices for the first communication node device. The RLC sublayer 303 provides segmentation and reassembly of upper-layer data packets, retransmission of lost data packets, and reordering of data packets to compensate for unordered reception caused by HARQ. The MAC sublayer 302 provides multiplexing between logical and transmission channels. The MAC sublayer 302 is also responsible for allocating, between the first communication node devices, various radio resources (for example, resource blocks) in one cell. The MAC sublayer 302 is also responsible for HARQ operations. The RRC (Radio Resource Control) sublayer 306 in the layer 3 (L3 layer) in the control plane 300 is responsible for obtaining radio resources (i.e., radio bearers) and configuring a lower layer by using the RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 for the physical layer 351, the PDCP sublayer 354 in the L2 layer 355, the RLC sublayer 353 in the L2 layer 355, and the MAC sublayer 352 in the L2 layer 355 is substantially the same as that in the control plane 300 for the corresponding layers and sublayers, but the PDCP sublayer 354 also provides header compression for upper-layer data packets to reduce radio transmission overhead. The L2 layer 355 in the user plane 350 further comprises an SDAP (Service Data Adaptation Protocol) sublayer 356, and the SDAP sublayer 356 is responsible for mapping between a QoS stream and a data radio bearer (DRB) to support the diversity of services. Although not shown, the first communication node device may have several upper layers above the L2 layer 355, comprising a network layer (for example, an IP layer) terminated at P-GW on the network side and an application layer terminated at the connected other end (for example, remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the first signaling is generated in RRC sublayer 306.

As one embodiment, the first signaling is generated in the MAC sublayer 302 or the MAC sublayer 352.

As one embodiment, the first signaling is generated in the PHY301 or the PHY351.

As one embodiment, the first information block is generated in the RRC sublayer 306.

As one embodiment, the first information block is generated in the MAC sublayer 302 or the MAC sublayer 352.

As one embodiment, the first information block is generated in the RRC sublayer 306 and the MAC sublayer 302.

As one embodiment, the first information block is generated in the RRC sublayer 306 and the PHY301.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

A first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

A second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

In a transmission from the first communication device 410 to the second communication device 450, at the first communication device 410, an upper-layer data packet from a core network is provided to the controller/processor 475. The controller/processor 475 implements the functionality of the L2 layer. In DL, the controller/processor 475 provides header compression, encryption, packet segmentation and reordering, multiplexing between logical and transmission channels, and radio resource allocation to the second communication device 450 based on various priority metrics. The controller/processor 475 is also responsible for an HARQ operation and retransmission of a lost packet, and for signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as mapping of constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook-based precoding, and beamforming processing on the coded and modulated symbols to generate one or more parallel streams. The transmitting processor 416 then maps each parallel stream to a subcarrier, the modulated symbol is multiplexed with a reference signal (for example, a pilot frequency) in the time domain and/or frequency domain, and subsequently an inverse fast Fourier transform (IFFT) is used to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the first communication device 410 to the second communication device 450, at the second communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any parallel stream with the second communication device 450 as the destination. The symbols on each parallel stream are demodulated and recovered in the receiving processor 456, and a soft decision is generated. Subsequently, the receiving processor 456 decodes and deinterleaves the soft decision to recover the upper-layer data and a control signal transmitted by the first communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In DL (DownLink), the controller/processor 459 provides demultiplexing between transmission and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing. The controller/processor 459 is also responsible for performing error detection by using an acknowledgement (ACK) and/or negative acknowledgement (NACK) protocol to support HARQ operations.

In a transmission from the second communication device 450 to the first communication device 410, at the second communication device 450, a data source 467 is used for providing the upper-layer data packet to the controller/processor 459. The data source 467 represents all protocol layers above the L2 layer. Similar to the sending function at the first communication device 410 described in DL, the controller/processor 459 implements header compression, encryption, packet segmentation and reordering, and multiplexing between logical and transmission channels based on wireless resource allocation of the first communication device 410, and implements L2 layer functions for the user plane and the control plane. The controller/processor 459 is also responsible for HARQ operations, retransmission of lost packets, and for signaling to the first communication device 410. The transmitting processor 468 performs modulation mapping and channel coding processing, and the multi-antenna transmitting processor 457 performs digital multi-antenna spatial precoding comprising codebook-based precoding and non-codebook-based precoding, and beamforming processing. Subsequently, the transmitting processor 468 modulates the generated parallel stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the receiving function at the second communication device 450 described in the transmission from the first communication device 410 to the second communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. The controller/processor 475 provides demultiplexing between transmission and logical channels, packet reassembly, decryption, header decompression, and control signal processing to recover the upper-layer data packet from the second communication device 450. The upper-layer data packet from the controller/processor 475 can be provided to the core network. The controller/processor 475 is also responsible for performing error detection by using an ACK and/or NACK protocol to support HARQ operations.

As one embodiment, the second communication device 450 comprises: at least one processor and at least one memory, wherein the at least one memory comprises a computer program code; and the at least one memory and the computer program code are configured to be used with the at least one processor. The second communication device 450 device at least: receives a first information block; receives first signaling, and sends a first bit block in a first time window, or foregoes sending the first bit block in the first time window, wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, the second communication device 450 comprises: a memory storing a computer-readable instruction program, wherein the computer-readable instruction program generates actions when executed by at least one processor, and the actions comprise: receiving a first information block; receiving first signaling, and sending a first bit block in a first time window, or foregoing sending the first bit block in the first time window, wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, the first communication device 410 comprises: at least one processor and at least one memory, wherein the at least one memory comprises a computer program code; and the at least one memory and the computer program code are configured to be used with the at least one processor. The first communication device 410 device at least: sends a first information block; sends first signaling; and receives a first bit block in a first time window, or foregoes receiving the first bit block in the first time window, wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, the first communication device 410 comprises: a memory storing a computer-readable instruction program, wherein the computer-readable instruction program generates actions when executed by at least one processor, and the actions comprise: sending a first information block; sending first signaling; and receiving a first bit block in a first time window, or foregoing receiving the first bit block in the first time window, wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the transmitting device 454, the transmitting processor 468, the multi-antenna transmitting processor 457, the controller/processor 459, and the memory 460} is used for sending the first bit block in the first time window in the present application; At least one of {the antenna 420, the receiving device 418, the receiving processor 470, the multi-antenna receiving processor 472, the controller/processor 475, and the memory 476} is used for receiving the first bit block in the first time window in the present application.

### Embodiment 5

Embodiment 5 illustrates a flow chart of wireless transmission according to one embodiment of the present application, as shown in FIG. 5. In FIG. 5, a first node U01 and a second node N02 are respectively two communication nodes for a transmission by an air interface, wherein the steps in blocks F1 and F2 are alternative.

For **the first node U01,** a first information block is received in step S5101; first signaling is received in step S5102; a first bit block is sent in a first time window in step S5103; and the sending of the first bit block is foregone in the first time window in step S5104;
for **the second node N02,** the first information block is sent in step S5201; the first signaling is sent in step S5202; the first bit block is received in the first time window in step S5203; the receiving of the first bit block is foregone in the first time window in step S5204;
in Embodiment 5, the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, a block F1 exists, and a block F2 does not exist.

As one embodiment, a block F2 exists, and a block F1 does not exist.

As one embodiment, the first signaling is used for determining a first time pool, the first time pool comprises N time windows, the first time window is one of the N time windows, and N is a positive integer greater than 1.

As one embodiment, a first transmitter in the present application also sends the first bit block in a second time window, wherein the first signaling is used for determining the first time pool, the first time pool comprises the first time window and the second time window, the second time window is orthogonal to the reference time domain resource set, and the first time window is orthogonal to the second time window.

As one embodiment, the method used in the first node in the present application comprises:
sending the first bit block in the second time window,
wherein the first signaling is used for determining the first time pool, the first time pool comprises the first time window and the second time window, the second time window is orthogonal to the reference time domain resource set, and the first time window is orthogonal to the second time window.

As one embodiment, the second receiver in the present application also receives the first bit block in the second time window, wherein the first signaling is used for determining the first time pool, the first time pool comprises the first time window and the second time window, the second time window is orthogonal to the reference time domain resource set, and the first time window is orthogonal to the second time window.

As one embodiment, the method used in the second node in the present application comprises:
receiving the first bit block in the second time window,
wherein the first signaling is used for determining the first time pool, the first time pool comprises the first time window and the second time window, the second time window is orthogonal to the reference time domain resource set, and the first time window is orthogonal to the second time window.

As one embodiment, the first signaling is used for determining the first time pool, the first time pool comprises the N time windows, and N is a positive integer greater than 1; and the first time window and the second time window are respectively two time windows in the N time windows.

### Embodiments 6A-6C

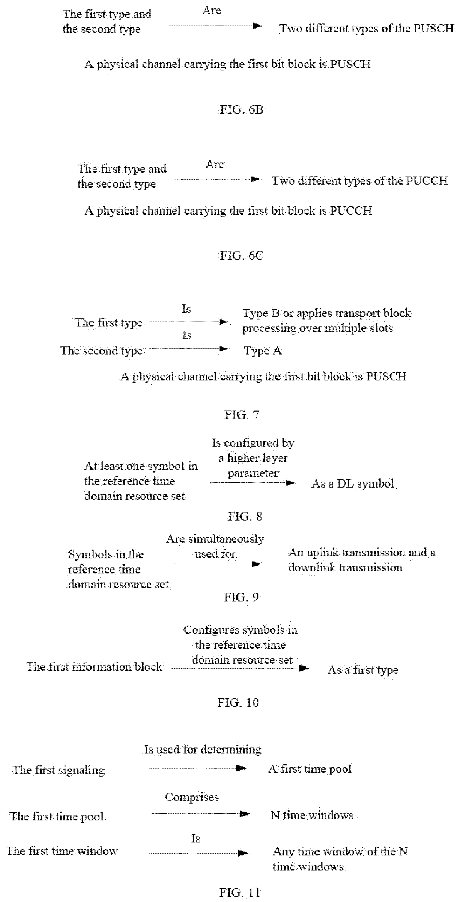

Embodiments 6A-6C respectively illustrate a schematic diagram of a first type and a second type according to one embodiment of the present application, as shown in FIGS. 6A-6C.

In Embodiment 6A, a physical channel carrying a first bit block is a PUSCH (Physical Uplink Shared Channel) or a PUCCH (Physical Uplink Control Channel), the first type is the PUCCH, and the second type is the PUSCH.

As one embodiment, the physical channel carrying the first bit block is the PUSCH (Physical Uplink Shared Channel) or the PUCCH (Physical Uplink Control Channel), the first type is the PUSCH, and the second type is the PUCCH.

In Embodiment 6B, the physical channel carrying the first bit block is the PUSCH, and the first type and the second type are two different PUSCH types.

As one embodiment, the physical channel carrying the first bit block is the PUSCH, and the types of the PUSCH comprise at least one or more of type A, type B, or applies TB processing over multiple slots.

As one embodiment, the physical channel carrying the first bit block is the PUSCH, and the types of the PUSCH comprise at least one or more of a single repetition or multiple repetitions.

As one embodiment, the physical channel carrying the first bit block is the PUSCH, and the types of the PUSCH comprise at least one or more of type A, type B, TB processing over multiple slots, a single repetition or multiple repetitions.

As one embodiment, the physical channel carrying the first bit block is the PUSCH, the first type is type B, and the second type is type A.

As one embodiment, the physical channel carrying the first bit block is the PUSCH, the first type applies TB processing over multiple slots, and the second type is type A.

As one embodiment, the physical channel carrying the first bit block is the PUSCH, the first type is the multiple repetitions, and the second type is the single repetition.

As one embodiment, the physical channel carrying the first bit block is the PUSCH, the first type is the single repetition, and the second type is the multiple repetitions.

As one embodiment, the physical channel carrying the first bit block is the PUSCH, and the types of the PUSCH comprise at least one or more of a single transmission reception point (TRP) transmission or a plurality of TRP transmissions.

As one embodiment, the full name of the TRP is transmission reception point.

As one embodiment, the full name of the TRP is transmitting receiving point.

As one embodiment, the full name of the TRP is transmission receiving point.

As one embodiment, the full name of the TRP is transmit receive point.

As one embodiment, the physical channel carrying the first bit block is the PUSCH, the first type is the single TRP transmission, and the second type is the plurality of TRP transmissions.

As one embodiment, the physical channel carrying the first bit block is the PUSCH, the first type is the plurality of TRP transmissions, and the second type is the single TRP transmission.

As one embodiment, the physical channel carrying the first bit block is the PUSCH, and the types of the PUSCH comprise at least one of SDM (Spatial Division Multiplexing), an SFN (Single Frequency Network), TDM (Time Division Multiplexing) or FDM (Frequency Division Multiplexing).

As one embodiment, the physical channel carrying the first bit block is the PUSCH, the first type is the SDM (Spatial Division Multiplexing), and the second type is the TDM (Time Division Multiplexing) or the FDM (Frequency Division Multiplexing).

As one embodiment, the physical channel carrying the first bit block is the PUSCH, the first type is the SDM (Spatial Division Multiplexing) or the SFN (Single Frequency Network), and the second type is the TDM (Time Division Multiplexing) or the FDM (Frequency Division Multiplexing).

As one embodiment, the physical channel carrying the first bit block is the PUSCH, the first type is the TDM or the FDM, and the second type is the SDM or the SFN.

As one embodiment, the physical channel carrying the first bit block is the PUSCH, the first type is not the SDM or the SFN, and the second type is the SDM or the SFN.

As one embodiment, the physical channel carrying the first bit block is the PUSCH, and the types of the PUSCH comprise at least one of supporting only one code word (CW), and supporting one code word and two code words.

As one embodiment, the physical channel carrying the first bit block is the PUSCH, the first type supports only one code word (CW), and the second type supports one code word and two code words.

As one embodiment, the physical channel carrying the first bit block is the PUSCH, the first type supports one code word and two code words, and the second type supports only one code word (CW).

As one embodiment, the physical channel carrying the first bit block is the PUSCH, the first type carries one code word (CW), and the second type carries two code words.

As one embodiment, the physical channel carrying the first bit block is the PUSCH, the first type carries two code words (CWs), and the second type carries one code word.

Typically, a PUSCH of type A occupies the same symbol position on each slot of the multiple slots.

Typically, a PUSCH of type B is assigned with a group of consecutive symbols.

Typically, the PUSCH of type B is assigned with one or more nominal repetitions.

Typically, in the PUSCH applying TB processing over multiple slots, a TBS (TB size) is determined according to sizes of time-frequency resources in the multiple slots.

As one embodiment, for the specific definitions of the type A PUSCH, the type B PUSCH, and the PUSCH applying TB processing over multiple slots, refer to Section 6 of 3GPP TS38.214.

In Embodiment 6C, the physical channel that carries the first bit block is the PUCCH, and the first type and the second type are two different PUCCH types.

As one embodiment, the physical channel that carries the first bit block is the PUCCH, and the types of the PUCCH comprise at least one of a slot level repetition or a sub-slot level repetition.

As one embodiment, the physical channel carrying the first bit block is the PUCCH, the first type is the sub-slot level repetition, and the second type is the slot level repetition.

As one embodiment, the physical channel carrying the first bit block is the PUCCH, and the types of the PUCCH comprise at least one of repetitions on different slots or repetitions in one slot.

As one embodiment, the physical channel carrying the first bit block is the PUCCH, the first type is the repetitions in one slot, and the second type is repetitions on different slots.

As one embodiment, the physical channel carrying the first bit block is the PUCCH, and the types of the PUCCH comprise at least one of the single repetition or the multiple repetitions.

As one embodiment, the physical channel carrying the first bit block is the PUCCH, the first type is the single repetition, and the second type is the multiple repetitions.

As one embodiment, the physical channel carrying the first bit block is the PUCCH, the first type is the multiple repetitions, and the second type is the single repetition.

As one embodiment, the physical channel carrying the first bit block is the PUCCH, and the types of the PUCCH comprise at least one or more of a single transmission reception point (TRP) transmission or a plurality of TRP transmissions.

As one embodiment, the physical channel carrying the first bit block is the PUCCH, the first type is a single TRP, and the second type is a plurality of TRPs.

As one embodiment, the physical channel carrying the first bit block is the PUCCH, and the types of the PUSCH comprise at least one of the SDM (Spatial Division Multiplexing), the SFN (Single Frequency Network), the TDM (Time Division Multiplexing) or the FDM (Frequency Division Multiplexing).

As one embodiment, the physical channel carrying the first bit block is the PUCCH, the first type is the SDM or the SFN, and the second type is the TDM or the FDM.

As one embodiment, the physical channel carrying the first bit block is the PUCCH, the first type is the TDM or the FDM, and the second type is the SDM or the SFN.

### Embodiment 7

Embodiment 7 illustrates a schematic diagram of a first type and a second type according to another embodiment of the present application, as shown in FIGS. 7A-7B.

In Embodiment 7, a physical channel carrying a first bit block is a PUSCH, the first type is type B or applies transport block processing over multiple slots, and the second type is type A; symbol positions occupied by a PUSCH of type A on each slot of multiple slots are the same; a PUSCH of type B is allocated with one or more nominal repetitions; and in a PUSCH applying transport block processing over multiple slots, a transport block size is determined according to sizes of time-frequency resources in the multiple slots.

As one embodiment, a nominal repetition is time domain resources allocated to the PUSCH, and an actual transmission of the PUSCH occupies parts or all of resources in the nominal repetition.

As one embodiment, for the specific definition of the nominal repetition, refer to Section 6.1 of 3GPP TS38.214.

As one embodiment, for the PUSCH of type B, after determining invalid symbols, the remaining symbols in each nominal repetition are potentially valid symbols; For any nominal repetition, if the number of the potentially valid symbols in the any nominal repetition is greater than 0, the any nominal repetition comprises one or more actual repetitions; and any actual repetition of the one or more actual repetitions consists of a group of consecutive potentially valid symbols of all potentially valid symbols in one slot.

Typically, a transport block size is a TBS (Transport Block Size).

As one embodiment, for the specific definition of the transport block size, refer to Chapter 6 of 3GPP TS38.214.

### Embodiment 8

Embodiment 8 illustrates a schematic diagram of a reference time domain resource set according to one embodiment of the present application, as shown in FIG. 8.

In Embodiment 8, at least one symbol in the reference time domain resource set is configured as a DL symbol by a higher layer parameter.

As one embodiment, each symbol in the reference time domain resource set is configured as the DL symbol by the higher layer parameter.

As one embodiment, parts of the symbols in the reference time domain resource set are configured as the DL symbols by the higher layer parameter.

As one embodiment, a symbol in the reference time domain resource set is configured as the DL symbol or a Flexible symbol by the higher layer parameter.

As one embodiment, at least one symbol in the reference time domain resource set is configured as the DL symbol by the higher layer parameter tdd-UL-DL-ConfigurationCommon or tdd-UL-DL-ConfigurationDedicated.

As one embodiment, each symbol in the reference time domain resource set is configured as the DL symbol by the higher layer parameter tdd-UL-DL-ConfigurationCommon or tdd-UL-DL-ConfigurationDedicated.

As one embodiment, parts of the symbols in the reference time domain resource set are configured as the DL symbols by the higher layer parameter tdd-UL-DL-ConfigurationCommon or tdd-UL-DL-ConfigurationDedicated.

As one embodiment, the symbol in the reference time domain resource set is configured as the DL symbol or the Flexible symbol by the higher layer parameter tdd-UL-DL-ConfigurationCommon or tdd-UL-DL-ConfigurationDedicated.

At least one symbol in the reference time domain resource set is configured as the DL symbol by the higher layer parameter tdd-UL-DL-ConfigurationCommon.

As one embodiment, each symbol in the reference time domain resource set is configured as the DL symbol by the higher layer parameter tdd-UL-DL-ConfigurationCommon.

As one embodiment, parts of the symbols in the reference time domain resource set are configured as the DL symbols by the higher layer parameter tdd-UL-DL-ConfigurationCommon.

As one embodiment, the symbol in the reference time domain resource set is configured as the DL symbol or the Flexible symbol by the higher layer parameter tdd-UL-DL-ConfigurationCommon.

### Embodiment 9

Embodiment 9 illustrates a schematic diagram of a reference time domain resource set according to another embodiment of the present application, as shown in FIG. 9.

In Embodiment 9, symbols in the reference time domain resource set are simultaneously used for an uplink transmission and a downlink transmission.

As one embodiment, a sender of first signaling simultaneously performs receiving and sending in the reference time domain resource set.

As one embodiment, a sender of the first signaling simultaneously receives and transmits wireless signals in the reference time domain resource set.

As one embodiment, a sender of the first signaling simultaneously performs receiving and sending in at least one symbol in the reference time domain resource set.

As one embodiment, a sender of the first signaling simultaneously performs receiving and sending in any symbol in the reference time domain resource set.

As one embodiment, in a serving cell where a physical channel carrying a first bit block is located, a sender of the first signaling simultaneously receives and sends wireless signals in the reference time domain resource set.

As one embodiment, in a serving cell where a physical channel carrying a first bit block is located, a sender of the first signaling simultaneously receives and sends wireless signals in any symbol in the reference time domain resource set.

As one embodiment, in a serving cell where a physical channel carrying a first bit block is located, a sender of the first signaling simultaneously receives and sends wireless signals in at least one symbol in the reference time domain resource set.

As one embodiment, in a serving cell group where a physical channel carrying a first bit block is located, a sender of the first signaling simultaneously receives and sends wireless signals in the reference time domain resource set.

As one embodiment, in the serving cell where the first signaling is located, a sender of the first signaling simultaneously receives and sends wireless signals in the reference time domain resource set.

As one embodiment, in a BWP to which the first signaling belongs, a sender of the first signaling simultaneously receives and sends wireless signals in the reference time domain resource set.

As one embodiment, in the BWP to which the physical channel carrying the first bit block belongs, a sender of the first signaling simultaneously receives and sends wireless signals in the reference time domain resource set.

As one embodiment, a sender of the first signaling supports simultaneous receiving and sending in the reference time domain resource set.

As one embodiment, a sender of the first signaling supports simultaneous reception and transmission of wireless signals in the reference time domain resource set.

As one embodiment, a sender of the first signaling supports simultaneous receiving and sending in at least one symbol in the reference time domain resource set.

As one embodiment, a sender of the first signaling supports simultaneous receiving and sending in any symbol in the reference time domain resource set.

As one embodiment, in a serving cell where a physical channel carrying a first bit block is located, a sender of the first signaling supports simultaneous receiving and sending of wireless signals in the reference time domain resource set.

As one embodiment, in a serving cell where a physical channel carrying a first bit block is located, a sender of the first signaling supports simultaneous receiving and sending of wireless signals in any symbol in the reference time domain resource set.

As one embodiment, in a serving cell where a physical channel carrying a first bit block is located, a sender of the first signaling supports simultaneous receiving and sending of wireless signals in at least one symbol in the reference time domain resource set.

As one embodiment, in the serving cell where the first signaling is located, a sender of the first signaling supports simultaneous receiving and sending of wireless signals in the reference time domain resource set.

As one embodiment, in a BWP (BandWidth Part) to which the first signaling belongs, a sender of the first signaling supports simultaneous receiving and sending of wireless signals in the reference time domain resource set.

As one embodiment, in the BWP to which the physical channel carrying the first bit block belongs, a sender of the first signaling supports simultaneous receiving and sending of wireless signals in the reference time domain resource set.

As one embodiment, the reference time domain resource set comprises symbols simultaneously used for the uplink transmission and the downlink transmission.

As one embodiment, any symbol in the reference time domain resource set can be simultaneously used for the uplink transmission and the downlink transmission.

As one embodiment, any symbol in the reference time domain resource set is simultaneously used for the uplink transmission and the downlink transmission.

As one embodiment, at least one symbol in the reference time domain resource set is simultaneously used for the uplink transmission and the downlink transmission.

As one embodiment, any symbol in the reference time domain resource set is simultaneously used for the uplink transmission and the downlink transmission in a serving cell where a physical channel carrying a first bit block is located.

As one embodiment, at least one symbol in the reference time domain resource set is simultaneously used for the uplink transmission and the downlink transmission in a serving cell where a physical channel carrying a first bit block is located.

As one embodiment, at least one symbol in the reference time domain resource set is simultaneously used for the uplink transmission and the downlink transmission in the serving cell group where the physical channel carrying the first bit block is located.

As one embodiment, at least one symbol in the reference time domain resource set is simultaneously used for the uplink transmission and the downlink transmission in a BWP to which the physical channel carrying the first bit block belongs.

As one embodiment, at least one symbol in the reference time domain resource set is simultaneously used for the uplink transmission and the downlink transmission in a BWP to which the first signaling belongs.

As one embodiment, the reference time domain resource set does not comprise symbols used for a transmission of a first type of downlink signals, and the first type of downlink signals comprises one or more of an SS (Synchronisation Signal)/PBCH (physical broadcast channel) block, a CORESET (COntrol REsource SET) with an index of 0, or an SIB (System Information Block).

As one embodiment, the reference time domain resource set does not comprise the symbols used for the transmission of the first type of downlink signals, and the first type of downlink signals comprises one or more of the SS/PBCH block of the serving cell where the physical channel carrying the first bit block is located, the CORESET with an index of 0, or the SIB.

### Embodiment 10

Embodiment 10 illustrates a schematic diagram of a reference time domain resource set according to another embodiment of the present application, as shown in FIG. 10.

In Embodiment 10, a first information block configures symbols in the reference time domain resource set as a first type.

As one embodiment, the first type is different from uplink and downlink.

As one embodiment, the first type is different from uplink, downlink and flexible.

As one embodiment, in a serving cell where a physical channel carrying a first bit block is located, the first information block configures the symbols in the reference time domain resource set as the first type.

As one embodiment, in a serving cell group where a physical channel carrying a first bit block is located, the first information block configures the symbols in the reference time domain resource set as the first type.

As one embodiment, in a BWP where a physical channel carrying a first bit block is located, the first information block configures the symbols in the reference time domain resource set as the first type.

As one embodiment, in a BWP where first signaling is located, the first information block configures the symbols in the reference time domain resource set as the first type.

As one embodiment, the meaning of the sentence that a symbol in the reference time domain resource set is configured as a first type comprises: each symbol in the reference time domain resource set is configured as the first type.

As one embodiment, the meaning of the sentence that a symbol in the reference time domain resource set is configured as a first type comprises: at least one symbol in the reference time domain resource set is configured as the first type.

As one embodiment, the meaning of the sentence that a symbol in the reference time domain resource set is configured as a first type comprises: the type of the symbols in the reference time domain resource set is configured as the first type.

As one embodiment, the meaning of the sentence that a symbol in the reference time domain resource set is configured as a first type comprises: the type of each symbol in the reference time domain resource set is configured as the first type.

As one embodiment, the meaning of the sentence that a symbol in the reference time domain resource set is configured as a first type comprises: a type of at least one symbol in the reference time domain resource set is configured as the first type.

As one embodiment, the meaning of the sentence that the first information block is used for determining a reference time domain resource set comprises: the first information block configures the symbols in the reference time domain resource set as the first type.

As one embodiment, the meaning of the sentence that the first information block is used for determining a reference time domain resource set comprises: the first information block configures each symbol in the reference time domain resource set as the first type.

As one embodiment, the meaning of the sentence that the first information block is used for determining a reference time domain resource set comprises: the first information block configures at least one symbol in the reference time domain resource set as the first type.

As one embodiment, the meaning of the sentence that the first information block is used for determining a reference time domain resource set comprises: the first information block indicates the type of each symbol in the reference time domain resource set.

As one embodiment, the meaning of the sentence that the first information block is used for determining a reference time domain resource set comprises: the first information block indicates that the type of each symbol in the reference time domain resource set is the first type.

As one embodiment, the meaning of the sentence that the first information block is used for determining a reference time domain resource set comprises: the first information block indicates that a type of at least one symbol in the reference time domain resource set is the first type.

As one embodiment, when one symbol is configured as the first type, a sender of the first signaling simultaneously receives and sends wireless signals on the one symbol.

As one embodiment, when one symbol is configured as the first type, a sender of the first signaling supports simultaneous receiving and sending of wireless signals on the one symbol.

As one embodiment, when one symbol is configured as a type other than the first type, a sender of the first signaling only receives wireless signals or only sends wireless signals on the one symbol.

As one embodiment, when one symbol is configured as the type other than the first type, a sender of the first signaling does not support simultaneous receiving and sending of wireless signals on the one symbol.

As one embodiment, the first information block is used for determining a first time domain resource set, and the first time domain resource set comprises at least one symbol; and the first time domain resource set is orthogonal to the reference time domain resource set.

As one embodiment, the reference time domain resource set comprises symbols that do not belong to the first time domain resource set.

As one embodiment, the reference time domain resource set consists of symbols that do not belong to the first time domain resource set.

As one embodiment, the first information block indicates the first time domain resource set.

As one embodiment, the meaning of the sentence that the first information block is used for determining a reference time domain resource set comprises: the first information block implicitly indicates the reference time domain resource set by indicating the first time domain resource set.

As one embodiment, the first time domain resource set comprises one symbol or a plurality of continuous symbols.

As one embodiment, the first time domain resource set comprises one symbol or a plurality of discontinuous symbols.

As one embodiment, the first time domain resource set comprises at least one slot.

As one embodiment, the first time domain resource set comprises at least one subframe.

As one embodiment, a sender of the first signaling only receives wireless signals or only sends wireless signals in the first time domain resource set.

As one embodiment, a sender of the first signaling only receives wireless signals or only sends wireless signals in any symbol in the first time domain resource set.

As one sub-embodiment of the above-mentioned embodiment, the first time domain resource set comprises two symbols, and a sender of the first signaling only receives wireless signals in one of the two symbols and only sends wireless signals in the other one of the two symbols.

As one embodiment, a sender of the first signaling only receives wireless signals in any symbol in the first time domain resource set.

As one embodiment, a sender of the first signaling only sends wireless signals in any symbol in the first time domain resource set.

As one embodiment, a sender of the first signaling only receives wireless signals or only sends wireless signals in at least one symbol in the first time domain resource set.

As one embodiment, in a cell where the physical channel carrying the first bit block is located, a sender of the first signaling only receives wireless signals or only sends wireless signals in any symbol in the first time domain resource set.

As one embodiment, the first time domain resource set comprises symbols used only for the uplink transmission.

As one embodiment, the first time domain resource set comprises symbols used only for the downlink transmission.

As one embodiment, the first time domain resource set comprises symbols used only for the uplink transmission and symbols used only for the downlink transmission.

As one embodiment, any symbol in the first time domain resource set is used only for the uplink transmission or used only for the downlink transmission.

As one sub-embodiment of the above-mentioned embodiment, there are two symbols in the first time domain resource set, one of the two symbols is used only for the uplink transmission, and the other one of the two symbols is used only for the downlink transmission.

As one embodiment, any symbol in the first time domain resource set is used only for the uplink transmission.

As one embodiment, any symbol in the first time domain resource set is used only for the downlink transmission.

As one embodiment, any symbol in the first time domain resource set is used only for the uplink transmission or only for the downlink transmission in the cell where the physical channel carrying the first bit block is located.

As one embodiment, the first information block configures the symbols in the first time domain resource set as a second type.

As one embodiment, the first information block configures each symbol in the first time domain resource set as the second type.

As one embodiment, the first information block configures at least one symbol in the first time domain resource set as the second type.

As one embodiment, the first information block configures the type of each symbol in the first time domain resource set as the second type.

As one embodiment, if one symbol is configured as the second type, a sender of the first signaling only receives wireless signals or only sends wireless signals on the one symbol.

As one embodiment, if one symbol is configured as the second type, a sender of the first signaling only receives wireless signals on the one symbol.

As one embodiment, if one symbol is configured as the second type, a sender of the first signaling only sends wireless signals on the one symbol.

As one embodiment, if one symbol is not configured as the second type, a sender of the first signaling simultaneously receives and sends wireless signals on the one symbol.

As one embodiment, the second type is different from the first type.

As one embodiment, the second type is one of uplink or downlink.

As one embodiment, the second type comprises uplink and downlink.

As one embodiment, the second type is one of uplink, downlink or flexible.

As one embodiment, the second type is different from uplink, downlink and flexible.

As one embodiment, the first information block configures the symbols in the first time domain resource set as a third type or a fourth type.

As one embodiment, the first information block configures any symbol in the first time domain resource set as the third type or the fourth type.

As one sub-embodiment of the above-mentioned embodiment, the first time domain resource set comprises two symbols, and the first information block configures one of the two symbols as the third type and configures the other one of the two symbols as the fourth type.

As one embodiment, if one symbol is configured as the third type, a sender of the first signaling only receives wireless signals on the one symbol.

As one embodiment, if one symbol is configured as the fourth type, a sender of the first signaling only sends wireless signals on the one symbol.

As one embodiment, if one symbol is neither configured as the third type nor configured as the fourth type, a sender of the first signaling simultaneously receives and sends wireless signals on the one symbol.

As one embodiment, if one symbol is not configured as one of the third type, the fourth type and flexible, a sender of the first signaling simultaneously receives and sends wireless signals on the one symbol.

As one embodiment, the third type is downlink and the fourth type is uplink.

As one embodiment, the third type is different from uplink, downlink and flexible; and the fourth type is different from uplink, downlink and flexible.

As one embodiment, a reference time domain resource set pool comprises a plurality of symbols, and the first information block indicates the reference time domain resource set from the reference time domain resource set pool.

As one sub-embodiment of the above-mentioned embodiment, the first information block indicates that only the symbols in the reference time domain resource set in the reference time domain resource set pool are configured as the first type.

As one sub-embodiment of the above-mentioned embodiment, the first time domain resource set consists of all symbols in the reference time domain resource set pool except the reference time domain resource set.

As one embodiment, the reference time domain resource set pool comprises the plurality of symbols, and the first information block indicates the first time domain resource set from the reference time domain resource set pool.

As one sub-embodiment of the above-mentioned embodiment, the first information block indicates that only the symbols in the first time domain resource set in the reference time domain resource set pool are configured as the second type.

As one sub-embodiment of the above-mentioned embodiment, the first information block indicates that only the symbols in the first time domain resource set in the reference time domain resource set pool are configured as the third type or the fourth type.

As one sub-embodiment of the above-mentioned embodiment, the reference time domain resource set consists of all symbols in the reference time domain resource set pool except the first time domain resource set.

### Embodiment 11

Embodiment 11 illustrates a schematic diagram of a first time pool according to one embodiment of the present application, as shown in FIG. 11.

In Embodiment 11, first signaling is used for determining the first time pool, the first time pool comprises N time windows, a first time window is any time window of the N time windows, and N is a positive integer greater than 1.

As one embodiment, the first signaling is used for configuring or scheduling a configured grant PUSCH, and the N time windows are respectively reserved for N configured grant PUSCHs.

As one embodiment, the first signaling is used for configuring or scheduling the configured grant PUSCH, and the N time windows are reserved for one configured grant PUSCH.

As one embodiment, the N time windows are consecutive.

As one embodiment, the N time windows occur periodically.

As one embodiment, any time window of the N time windows is reserved for one nominal repetition of a transmission of a first bit block, and any time sub-window in a first time sub-window group is used for one actual repetition of the first bit block.

As one embodiment, the first time sub-window group comprises M time sub-windows, and M is a positive integer greater than 1; and the M time sub-windows respectively comprise M actual repetitions of the first bit block.

As one embodiment, for the specific definition of the nominal repetition, refer to Section 6.1 of 3GPP TS38.214.

As one embodiment, a first symbol and a second symbol belong to the same time window of the N time windows, the first symbol belongs to a reference time domain resource set, the second symbol is one symbol outside the reference time domain resource set, and the first symbol and the second symbol respectively belong to different time sub-windows in the same time window where they are located.

As one embodiment, any time window of the N time windows comprises at least one symbol.

As one embodiment, any time window of the N time windows comprises one symbol or a plurality of consecutive symbols.

As one embodiment, any time window of the N time windows consists of the one symbol or the plurality of consecutive symbols.

As one embodiment, any two time windows of the N time windows are mutually orthogonal in a time domain.

As one embodiment, the N time windows are respectively allocated to N repetitions of the first bit block.

As one embodiment, the N time windows are respectively allocated to N nominal repetitions of the first bit block.

As one embodiment, the first time pool comprises time domain resources allocated to a physical channel carrying the first bit block.

As one embodiment, the first time pool comprises at least one nominal repetition.

As one embodiment, the first time pool comprises one nominal repetition.

As one embodiment, the first time pool comprises more than one nominal repetition.

As one embodiment, the first time pool comprises the one symbol or the plurality of consecutive symbols.

As one embodiment, the first time pool comprises parts or all of symbols in at least one slot.

As one embodiment, one time window comprises one nominal repetition.

As one embodiment, one time window comprises the one symbol or the plurality of consecutive symbols.

As one embodiment, one time window comprises the plurality of consecutive symbols.

As one embodiment, one time sub-window comprises one actual repetition.

As one embodiment, one time sub-window comprises the plurality of consecutive symbols.

As one embodiment, one time sub-window comprises the one symbol or the plurality of consecutive symbols.

As one embodiment, one time sub-window is within one slot.

As one embodiment, one time window comprises at least one time sub-window, the one time window comprises a consecutive period of time, and one time sub-window comprises one consecutive period of time.

As one embodiment, one time window comprises at least one time sub-window, and the duration of one time sub-window is not greater than the duration of the time window in which the one time sub-window is located.

As one embodiment, one time window comprises at least one time sub-window, and the number of symbols included in one time sub-window is not greater than the number of symbols included in the time window in which the one time sub-window is located.

As one embodiment, the first signaling is used for indicating the first time pool.

As one embodiment, the first signaling explicitly indicates the first time pool.

As one embodiment, the first signaling implicitly indicates the first time pool.

As one embodiment, the first signaling indicates the start moment of the first time pool.

As one embodiment, the first signaling is used for indicating a periodically occurring time pool, and the first time pool is one time pool of the periodically occurring time pools indicated by the first signaling.

As one embodiment, the first signaling indicates the start moment of the first time pool and the total duration of the first time pool.

As one embodiment, the first time pool comprises at least one symbol, and the first signaling indicates a start symbol of the first time pool.

As one embodiment, the first time pool comprises at least one symbol, and the first signaling indicates the start symbol of the first time pool and the number of symbols included in the first time pool.

As one embodiment, the first signaling is used for indicating a periodically occurring time pool, and the first time pool is one time pool of the periodically occurring time pools indicated by the first signaling; and the first signaling indicates the start symbol of the first time pool in the periodically occurring time pool and the number of symbols included.

As one embodiment, the first time pool comprises at least one symbol, and the first signaling comprises a first domain, and the first domain in the first signaling indicates the start symbol of the first time pool and the number of symbols included in the first time pool; and the first domain comprises at least one bit.

As one embodiment, the total duration of the first time pool is indicated by the first signaling.

As one embodiment, the total duration of the first time pool is configured by a higher layer parameter.

As one embodiment, the first signaling comprises the first domain, the first domain in the first signaling indicates a reference time window, and the reference time window is one time window in the first time pool; and the first domain comprises at least one bit.

As one sub-embodiment of the above-mentioned embodiment, the first domain in the first signaling indicates the reference time window and the number of time windows included in the first time pool.

As one sub-embodiment of the above-mentioned embodiment, the first domain in the first signaling indicates the start symbol of the reference time window, the total number of symbols included in the reference time window, and the number of time windows included in the first time pool.

As one sub-embodiment of the above-mentioned embodiment, the reference time window is the earliest time window in the first time pool.

As one sub-embodiment of the above-mentioned embodiment, the first time pool comprises only one time window, and the reference time window is the first time pool.

As one sub-embodiment of the above-mentioned embodiment, the first time pool comprises N time windows, and N is a positive integer greater than 1; and the reference time window is the earliest time window in the N time windows.

As one sub-embodiment of the above-mentioned embodiment, the first time pool comprises N time windows, and N is a positive integer greater than 1; and the reference time window is used for determining N-1 time windows outside the reference time window in the N time windows.

As one sub-embodiment of the above-mentioned embodiment, the first time pool comprises N time windows, and N is a positive integer greater than 1; and all time windows outside the reference time window in the N time windows consist of N-1 time windows that are later than the reference time window and are consecutive.

As one sub-embodiment of the above-mentioned embodiment, the first time pool comprises N time windows, and N is a positive integer greater than 1; and all time windows outside the reference time window in the N time windows consist of N-1 time windows that are later than the reference time window and are spaced by a first threshold, and the first threshold comprises at least one symbol.

As one sub-embodiment of the above-mentioned embodiment, the first domain in the first signaling indicates the start symbol of the reference time window and the total number of symbols included in the reference time window.

As one sub-embodiment of the above-mentioned embodiment, the first time pool comprises N time windows, and N is a positive integer; and the first domain in the first signaling indicates the start symbol of the reference time window, the total number of symbols included in the reference time window, and the N.

As one sub-embodiment of the above-mentioned embodiment, the first time pool comprises N time windows, and N is a positive integer; and the first domain in the first signaling indicates the start symbol of the reference time window and the total number of symbols included in the reference time window; and N is configured by the higher layer parameter.

As one sub-embodiment of the above-mentioned embodiment, the first domain in the first signaling indicates the start moment of the reference time window and the duration of the reference time window.

As one sub-embodiment of the above-mentioned embodiment, the first domain in the first signaling indicates the start moment of the reference time window and the duration of the reference time window and the number of time windows included in the first time pool.

As one sub-embodiment of the above-mentioned embodiment, the first time pool comprises N time windows, and N is a positive integer; and the first domain in the first signaling indicates the start moment of the reference time window and the duration of the reference time window and the N.

### Embodiment 12

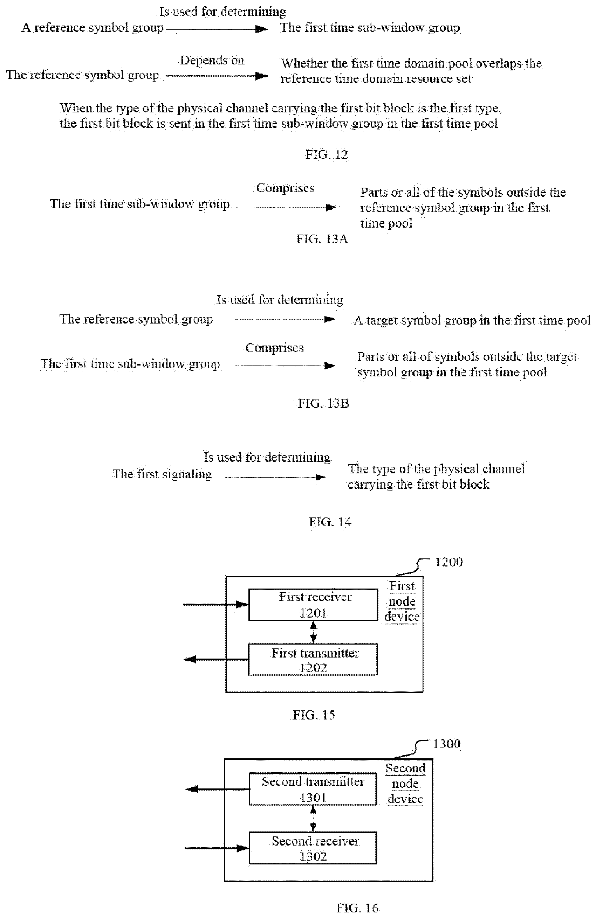

Embodiment 12 illustrates a schematic diagram of a reference symbol group according to one embodiment of the present application; and as shown in FIG. 12.

In Embodiment 12, when a type of a physical channel carrying a first bit block is a first type, the first bit block is sent in a first time sub-window group in the first time pool, a reference symbol group is used for determining the first time sub-window group, and the reference symbol group depends on whether the first time pool overlaps the reference time domain resource set.

As one embodiment, when the first time pool is orthogonal to the reference time domain resource set, the reference symbol group is a first symbol group.

As one embodiment, when the first time pool belongs to the reference time domain resource set, the reference symbol group is a second symbol group.

As one embodiment, when the first time pool overlaps the reference time domain resource set and the first time pool comprises time domain resources that do not belong to the reference time domain resource set, the reference symbol group comprises the first symbol group and the second symbol group.

As one embodiment, first signaling comprises a third domain, and the third domain in the first signaling indicates that the reference symbol group is used for determining the first time sub-window group.

As one sub-embodiment of the above-mentioned embodiment, the third domain comprises one bit.

As one sub-embodiment of the above-mentioned embodiment, the name of the third domain comprises an invalid symbol pattern indicator.

As one sub-embodiment of the above-mentioned embodiment, the third domain comprises one bit, and a value of the third domain in the first signaling is 1.

As one sub-embodiment of the above-mentioned embodiment, the third domain comprises one bit, and the value of the third domain being 0 indicates that the invalid symbol pattern is not applied, and the value of the third domain being 1 indicates that the invalid symbol pattern is applied.

As one sub-embodiment of the above-mentioned embodiment, the third domain is the invalid symbol pattern indicator.

As one sub-embodiment of the above-mentioned embodiment, the name of the third domain comprises an invalid symbol pattern.

As one sub-embodiment of the above-mentioned embodiment, the third domain comprises two bits, and the two bits included in the third domain respectively correspond to time domain resources in the reference time domain resource set and time domain resources outside the reference time domain resource set.

As one sub-embodiment of the above-mentioned embodiment, the third domain comprises two bits, and the two bits included in the third domain respectively indicate whether the invalid symbol pattern is applied in the reference time domain resource set and whether the invalid symbol pattern is applied to the time domain resources outside the reference time domain resource set.

As one sub-embodiment of the above-mentioned embodiment, the third domain comprises two bits, and the two bits included in the third domain respectively correspond to time domain resources in the first time pool that belong to the reference time domain resource set and time domain resources in the first time pool that are outside the reference time domain resource set.

As one sub-embodiment of the above-mentioned embodiment, the third domain comprises two bits, and the two bits included in the third domain in the first signaling respectively indicate that the invalid symbol pattern is applied in the time domain resources in the first time pool that belong to the reference time domain resource set and the invalid symbol pattern is applied in the time domain resources in the first time pool that are outside the reference time domain resource set.

As one sub-embodiment of the above-mentioned embodiment, the third domain comprises one bit, and the third domain corresponds to the time domain resources in the first time pool that are outside the reference time domain resource set.

As one sub-embodiment of the above-mentioned embodiment, the third domain comprises one bit, and the third domain in the first signaling indicates that the invalid symbol pattern is applied in the time domain resources in the first time pool that are outside the reference time domain resource set.

As one sub-embodiment of the above-mentioned embodiment, the third domain comprises one bit, and the third domain in the first signaling indicates that the invalid symbol pattern is applied to both the time domain resources in the first time pool that are outside the reference time domain resource set and the time domain resources in the first time pool that belong to the reference time domain resource set.

As one sub-embodiment of the above-mentioned embodiment, the third domain comprises one bit, and the third domain in the first signaling indicates that the invalid symbol pattern is applied to the time domain resources in the first time pool that are outside the reference time domain resource set; and a higher layer parameter is used for configuring an application of the invalid symbol pattern to the time domain resources in the first time pool that belong to the reference time domain resource set.

As one sub-embodiment of the above-mentioned embodiment, the third domain comprises one bit, and the third domain in the first signaling indicates that the invalid symbol pattern is applied to the time domain resources in the first time pool that are outside the reference time domain resource set; and the application of the invalid symbol pattern in the time domain resources in the first time pool that belong to the reference time domain resource set is by default.

As one embodiment, the invalid symbol pattern applied in the time domain resources in the first time pool that belong to the reference time domain resource set corresponds to the second symbol group, and the invalid symbol pattern applied in the time domain resources in the first time pool that are outside the reference time domain resource set corresponds to the first symbol group.

As one embodiment, at least the reference symbol group is used for determining the first time sub-window group.

As one embodiment, the reference symbol group is used for determining at least one invalid symbol from the first time pool, and the first time sub-window group comprises parts or all of symbols other than all invalid symbols in the first time pool.

As one embodiment, the reference symbol group is used for determining the first time sub-window group from the first time pool.

As one embodiment, the reference symbol group is used for determining which symbol(s) in the first time pool does not belong to the first time sub-window group.

As one embodiment, the reference symbol group is used for determining which symbol(s) in the first time pool belongs to or does not belong to the first time sub-window group.

As one embodiment, a type of at least one symbol in the first time pool is used for determining the first time sub-window group.

As one embodiment, a type of any symbol in the first time pool is used for determining the first time sub-window group.

As one embodiment, a type of at least one symbol in the first time pool is used for determining at least one invalid symbol from the first time pool, and the first time sub-window group comprises parts or all of symbols other than all invalid symbols in the first time pool.

As one embodiment, a type of any symbol in the first time pool is used for determining at least one invalid symbol from the first time pool, and the first time sub-window group comprises parts or all of symbols other than all invalid symbols in the first time pool.

As one embodiment, the reference symbol group is directed at a serving cell where the physical channel carrying the first bit block is located.

As one embodiment, the reference symbol group is directed at a BWP where the physical channel carrying the first bit block is located.

As one embodiment, the reference symbol group is directed at a UL BWP where the physical channel carrying the first bit block is located.

As one embodiment, the first symbol group and the second symbol group are both directed at the serving cell where the physical channel carrying the first bit block is located.

As one embodiment, the first symbol group and the second symbol group are both directed at the BWP where the physical channel carrying the first bit block is located.

As one embodiment, the first symbol group and the second symbol group are both configured to the serving cell where the physical channel carrying the first bit block is located.

As one embodiment, the first symbol group and the second symbol group are both configured to the BWP where the physical channel carrying the first bit block is located.

As one embodiment, the reference symbol group comprises one symbol or a plurality of symbols, the first symbol group comprises one symbol or a plurality of symbols, and the second symbol group comprises one symbol or a plurality of symbols.

As one embodiment, the second symbol group comprises parts of the symbols in the first symbol group.

As one embodiment, the second symbol group does not comprise symbols in the first symbol group.

As one embodiment, the second symbol group is orthogonal to the first symbol group.

As one embodiment, the second symbol group comprises parts of the symbols in the first symbol group and at least one symbol other than the first symbol group.

As one embodiment, the first symbol group and the second symbol group are determined respectively.

As one embodiment, the first symbol group and the second symbol group are different.

As one embodiment, the first symbol group and the second symbol group are configured respectively.

As one embodiment, the first symbol group and the second symbol group are configured respectively by higher layer signaling.

As one embodiment, the first symbol group and the second symbol group are configured respectively by the higher layer parameters.

As one embodiment, the name of an RRC parameter for configuring the first symbol group comprises InvalidSymbolPattern.

As one embodiment, the name of the RRC parameter for configuring the second symbol group comprises the InvalidSymbolPattern.

As one embodiment, the first symbol group and the second symbol group are both configured to the serving cell where the physical channel carrying the first bit block is located.

As one embodiment, the first symbol group and the second symbol group are both configured to the serving cell where the physical channel carrying the first bit block is located.

As one embodiment, the first symbol group and the second symbol group are both configured to the BWP where the physical channel carrying the first bit block is located.

Typically, which one symbol group of J symbol groups is the reference symbol group depends on whether the first time pool overlaps the reference time domain resource set, and the J symbol groups comprise the first symbol group and the second symbol group, and J is a positive integer greater than 1.

Typically, the meaning of the sentence that "the first time pool is orthogonal to the reference time domain resource set" means that any symbol in the first time pool does not belong to the reference time domain resource set.

Typically, the meaning of the sentence that "the first time pool overlaps the reference time domain resource set" means that the first time pool belongs to the reference time domain resource set.

Typically, the meaning of the sentence that "the first time pool overlaps the reference time domain resource set" means that the first time pool comprises time domain resources belonging to the reference time domain resource set and time domain resources outside the reference time domain resource set.

Typically, the meaning of the sentence that "the first time pool overlaps the reference time domain resource set" means that the first time pool and the reference time domain resource set are partially or completely overlapped.

As one embodiment, the reference time sub-window is one time sub-window in the first time sub-window group, and a target RB set is used for transmitting the first bit block in the reference time sub-window; The target RB set depends on whether the reference time sub-window is orthogonal to the reference time domain resource set.

As one sub-embodiment of the above-mentioned embodiment, when the reference time sub-window is orthogonal to the reference time domain resource set, the target RB set is a first RB set; and when the reference time sub-window belongs to the reference time domain resource set, the target RB set is a second RB set.

As one embodiment, the second RB set belongs to the first RB set.

As one embodiment, the number of RBs included in the second RB set is not greater than the number of RBs included in the first RB set.

As one embodiment, the number of RBs included in the second RB set is less than the number of RBs included in the first RB set.

As one embodiment, the second RB set comprises parts of RBs in the first RB set.

As one embodiment, the second RB set comprises parts or all of RBs in the first RB set.

As one embodiment, the first signaling indicates a first RB set; when the reference time sub-window is orthogonal to the reference time domain resource set, the target RB set is the first RB set; and when the reference time sub-window belongs to the reference time domain resource set, the target RB set comprises at least one RB in the first RB set that belongs to the reference RB set.

As one embodiment, any time sub-window in the first time sub-window group belongs to one of the N time windows.

As one embodiment, the first time sub-window group belongs to the first time pool.

As one embodiment, the first time sub-window group comprises only one time sub-window.

As one embodiment, the first time sub-window group comprises at least one time sub-window.

As one embodiment, the first time sub-window group comprises only one time sub-window, and the only time sub-window is used for transmitting one actual repetition of the first bit block.

### Embodiments 13A-13B

Embodiments 13A-13B respectively illustrate a schematic diagram of a first time sub-window group according to one embodiment of the present application, as shown in FIGS. 13A-13B.

In Embodiment 13A, the first time sub-window group comprises parts or all of symbols in a first time pool outside a reference symbol group.

In Embodiment 13B, the reference symbol group is used for determining a target symbol group in the first time pool, and the first time sub-window group comprises parts or all of symbols outside the target symbol group in the first time pool.

As one embodiment, the target symbol group consists of invalid symbols.

As one embodiment, the target symbol group comprises at least one invalid symbol.

As one embodiment, at least one symbol in the target symbol group belongs to the reference symbol group.

As one embodiment, the target symbol group comprises all symbols in the reference symbol group that belong to the first time pool.

As one embodiment, the target symbol group comprises parts or all of symbols in the reference symbol group that belong to the first time pool.

As one embodiment, the target symbol group only comprises parts or all of symbols in the reference symbol group that belong to the first time pool.

As one embodiment, the target symbol group comprises parts or all of symbols in the reference symbol group that belong to the first time pool, and the target symbol group also comprises symbols in the first time pool that do not belong to the reference symbol group.

As one embodiment, the first time sub-window group comprises parts of symbols outside the target symbol group in the first time pool.

As one embodiment, the first time sub-window group comprises all symbols outside the target symbol group in the first time pool.

As one embodiment, the second time sub-window group comprises all symbols outside the target symbol group in the first time pool, and the second time sub-window group comprises at least one time sub-window; and the first time sub-window group comprises all time sub-windows in the second time sub-window group that have the number of symbols being not 1.

As one embodiment, the second time sub-window group comprises all symbols outside the target symbol group in the first time pool, and the second time sub-window group comprises at least one time sub-window; and the first time sub-window group comprises all time sub-windows in the second time sub-window group that have the number of symbols does not belong to the first integer set, and the first integer set comprises one or more positive integers.

As one embodiment, the type of symbols in the first time pool is also used for determining the target symbol group.

As one embodiment, the type of symbols in the first time pool is used for determining whether each symbol in the first time pool is the invalid symbol.

As one embodiment, a given symbol is any symbol in the first time pool; and when the given symbol is indicated for receiving a SS/PBCH (Synchronization Signal/Physical Broadcast Channel) block, the given symbol is the invalid symbol.

As one sub-embodiment of the above-mentioned embodiment, the SS/PBCH block belongs to a serving cell where first signaling is located.

As one sub-embodiment of the above-mentioned embodiment, the SS/PBCH block belongs to the serving cell where a physical channel carrying a first bit block is located.

As one sub-embodiment of the above-mentioned embodiment, the SS/PBCH block belongs to one cell other than the serving cell where the physical channel carrying the first bit block is located.

As one sub-embodiment of the above-mentioned embodiment, the SS/PBCH block belongs to a BWP where the first signaling is located.

As one embodiment, a given symbol is any symbol in the first time pool; and when the given symbol is indicated for one CORESET of a Type0-PDCCH CSS set, the given symbol is the invalid symbol.

As one embodiment, a given symbol is any symbol in the first time pool; and when the given symbol is a DL-UL switching symbol, the given symbol is the invalid symbol.

As one embodiment, a given symbol is any symbol in the first time pool; and when the given symbol is used for the DL-UL switching, the given symbol is the invalid symbol.

As one embodiment, a given symbol is any symbol in the first time pool; and when the given symbol is indicated as the invalid symbol by a higher layer parameter, the given symbol is the invalid symbol.

As one embodiment, a given symbol is any symbol in the first time pool; and when the given symbol is configured as a downlink symbol by the higher layer parameter and the given symbol is a symbol outside the reference time domain resource set, the given symbol is considered to be the invalid symbol.

As one embodiment, a given symbol is any symbol in the first time pool; and when the given symbol is configured as a downlink symbol by tdd-UL-DL-ConfigurationCommon or tdd-UL-DL-ConfigurationDedicated and the given symbol is the symbol outside the reference time domain resource set, the given symbol is considered to be the invalid symbol.

As one embodiment, the phrase "invalid symbol" means: the invalid symbol for a transmission of the first bit block.

As one embodiment, the phrase "invalid symbol" means: the invalid symbol for a transmission of a PUSCH repetition of type B.

### Embodiment 14

Embodiment 14 illustrates a schematic diagram of a relationship between first signaling and a type of a physical channel carrying a first bit block according to one embodiment of the present application, as shown in FIG. 14.

In Embodiment 14, the first signaling is used for determining the type of the physical channel carrying the first bit block.

As one embodiment, a DCI format of the first signaling is used for determining the type of the physical channel carrying the first bit block.

As one embodiment, for the DCI format of the first signaling, an RNTI (Radio Network Temporary Identifier) of the scrambled CRC (Cyclic redundancy check) is used for determining the type of the physical channel carrying the first bit block.

As one embodiment, the first signaling is used for indicating the type of the physical channel carrying the first bit block.

As one embodiment, the first signaling explicitly indicates the type of the physical channel carrying the first bit block.

As one embodiment, the first signaling implicitly indicates the type of the physical channel carrying the first bit block.

As one embodiment, at least one domain in the first signaling indicates the type of the physical channel carrying the first bit block.

As one embodiment, whether the DCI format of the first signaling is downlink or uplink is used for determining the type of the physical channel carrying the first bit block.

As one embodiment, when the DCI format of the first signaling is the downlink, the type of the physical channel carrying the first bit block is a first type; and when the DCI format of the first signaling is the uplink, the type of the physical channel carrying the first bit block is a second type.

As one embodiment, when the DCI format of the first signaling is the uplink, the type of the physical channel carrying the first bit block is the first type; and when the DCI format of the first signaling is the downlink, the type of the physical channel carrying the first bit block is the second type.

As one embodiment, when the DCI format of the first signaling belongs to the first DCI format, the type of the physical channel carrying the first bit block is the first type; when the DCI format of the first signaling belongs to the second DCI format, the type of the physical channel carrying the first bit block is the second type; and the first DCI format and the second DCI format are different.

As one embodiment, for at least one DCI format, a higher layer signaling configures the type of the physical channel configured or scheduled by the at least one DCI format.

As one embodiment, for at least one DCI format, the higher layer signaling configures the type of PUSCH configured or scheduled by the at least one DCI format.

As one embodiment, for at least one DCI format, the higher layer signaling configures a type of a PUCCH indicated by the at least one DCI format.

### Embodiment 15

Embodiment 15 illustrates a structural block diagram of a processing device for use in a first node device according to one embodiment of the present application, as shown in FIG. 15. In FIG. 15, the processing device 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {the antenna 452, the receiving device 454, the receiving processor 456, the multi-antenna receiving processor 458, the controller/processor 459, the memory 460, and data source 467} in Embodiment 4.

As one embodiment, the first transmitter 1202 comprises at least one of {the antenna 452, the transmitting device 454, the transmitting processor 468, the multi-antenna transmitting processor 457, the controller/processor 459, the memory 460, and the data source 467} in Embodiment 4.

A first receiver 1201 receives a first information block; and receives first signaling.

A first transmitter 1202 sends a first bit block in a first time window, or foregoes sending the first bit block in the first time window;
in Embodiment 15, the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, the physical channel carrying the first bit block is a PUSCH, the first type is type B or applies transport block processing over multiple slots, and the second type is type A; symbol positions occupied by a PUSCH of type A on each slot of multiple slots are the same; a PUSCH of type B is allocated with one or more nominal repetitions; and in a PUSCH applying transport block processing over multiple slots, a transport block size is determined according to sizes of time-frequency resources in the multiple slots.

As one embodiment, at least one symbol in the reference time domain resource set is configured as a DL symbol by a higher layer parameter.

As one embodiment, first signaling is used for determining a first time pool, the first time pool comprises N time windows, the first time window is any time window of the N time windows, and N is a positive integer greater than 1.

As one embodiment, when the type of the physical channel carrying the first bit block is the first type, the first bit block is sent in a first time sub-window group in the first time pool, a reference symbol group is used for determining the first time sub-window group, and the reference symbol group depends on whether the first time pool overlaps the reference time domain resource set.

As one embodiment, the reference symbol group is used for determining a target symbol group in the first time pool, and the first time sub-window group comprises parts or all of symbols outside the target symbol group in the first time pool.

As one embodiment, the first signaling is used for determining the type of the physical channel carrying the first bit block.

### Embodiment 16

Embodiment 16 illustrates a structural block diagram of a processing device for use in a second node device according to one embodiment of the present application, as shown in FIG. 16. In FIG. 16, the processing device 1300 in the second node device comprises a second transmitter 1301 and a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {the antenna 420, the transmitting device 418, the transmitting processor 416, the multi-antenna transmitting processor 471, the controller/processor 475, and the memory 476} in Embodiment 4.

As one embodiment, the second receiver 1302 comprises at least one of {the antenna 420, the receiving device 418, the receiving processor 470, the multi-antenna receiving processor 472, the controller/processor 475, and the memory 476} in Embodiment 4.

The second transmitter 1301 sends a first information block; and sends first signaling.

The second receiver 1302 receives a first bit block in a first time window, or foregoes receiving the first bit block in the first time window;
in Embodiment 16, the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

As one embodiment, the physical channel carrying the first bit block is a PUSCH, the first type is type B or applies transport block processing over multiple slots, and the second type is type A; symbol positions occupied by a PUSCH of type A on each slot of multiple slots are the same; a PUSCH of type B is allocated with one or more nominal repetitions; and in a PUSCH applying transport block processing over multiple slots, a transport block size is determined according to sizes of time-frequency resources in the multiple slots.

As one embodiment, at least one symbol in the reference time domain resource set is configured as a DL symbol by a higher layer parameter.

As one embodiment, first signaling is used for determining a first time pool, the first time pool comprises N time windows, the first time window is any time window of the N time windows, and N is a positive integer greater than 1.

As one embodiment, when the type of the physical channel carrying the first bit block is the first type, the first bit block is sent in a first time sub-window group in the first time pool, a reference symbol group is used for determining the first time sub-window group, and the reference symbol group depends on whether the first time pool overlaps the reference time domain resource set.

As one embodiment, the reference symbol group is used for determining a target symbol group in the first time pool, and the first time sub-window group comprises parts or all of symbols outside the target symbol group in the first time pool.

As one embodiment, the first signaling is used for determining the type of the physical channel carrying the first bit block.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The user equipment, the terminal and the UE in the present application include but are not limited to a drone, a communication module on the drone, a remote-controlled airplane, an aircraft, a small airplane, a mobile phone, a tablet computer, a notebook, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base stations or the system devices in the present application include but are not limited to a macrocell base station, a microcell base station, a Femtocell, a relay base station, a gNB (NR node B) NR node B, a TRP (Transmitter Receiver Point) and other wireless communication devices.

The above is only a preferred embodiment of the present application and is not intended to limit the scope of protection of the present application. Any changes and modifications made based on the embodiments described in the specification, if similar partial or full technical effects can be obtained, should be deemed to be obvious and fall within the scope of protection of the present invention.

## Claims

1. A first node device used in wireless communication, comprising:
a first receiver for receiving a first information block, and receiving first signaling, and
a first transmitter for sending a first bit block in a first time window, or foregoing sending the first bit block in the first time window,
wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

2. The first node device according to claim 1, wherein the physical channel carrying the first bit block is a PUSCH, the first type is type B or applies transport block processing over multiple slots, and the second type is type A; symbol positions occupied by a PUSCH of type A on each slot of multiple slots are the same; a PUSCH of type B is allocated with one or more nominal repetitions; and in a PUSCH applying transport block processing over multiple slots, a transport block size is determined according to sizes of time-frequency resources in the multiple slots.

3. The first node device according to claim 1 or 2, wherein at least one symbol in the reference time domain resource set is configured as a DL symbol by a higher layer parameter.

4. The first node device according to any one of claims 1 to 3, wherein the first signaling is used for determining a first time pool, the first time pool comprises N time windows, the first time window is any time window of the N time windows, and N is a positive integer greater than 1.

5. The first node device according to claim 4, wherein when the type of the physical channel carrying the first bit block is the first type, the first bit block is sent in a first time sub-window group in the first time pool, a reference symbol group is used for determining the first time sub-window group, and the reference symbol group depends on whether the first time pool overlaps the reference time domain resource set.

6. The first node device according to claim 5, wherein the reference symbol group is used for determining a target symbol group in the first time pool, and the first time sub-window group comprises parts or all of symbols outside the target symbol group in the first time pool.

7. The first node device according to any one of claims 1 to 4, wherein the first signaling is used for determining the type of the physical channel carrying the first bit block.

8. A second node device used in wireless communication, comprising:
a second transmitter for sending a first information block, and sending first signaling; and
a second receiver for receiving a first bit block in a first time window, or foregoing receiving the first bit block in the first time window,
wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

9. The second node device according to claim 8, wherein the physical channel carrying the first bit block is a PUSCH, the first type is type B or applies transport block processing over multiple slots, and the second type is type A; symbol positions occupied by a PUSCH of type A on each slot of multiple slots are the same; a PUSCH of type B is allocated with one or more nominal repetitions; and in a PUSCH applying transport block processing over multiple slots, a transport block size is determined according to sizes of time-frequency resources in the multiple slots.

10. The second node device according to claim 8 or 9, wherein at least one symbol in the reference time domain resource set is configured as a DL symbol by a higher layer parameter.

11. The second node device according to any one of claims 8 to 10, wherein the first signaling is used for determining a first time pool, the first time pool comprises N time windows, the first time window is any time window of the N time windows, and N is a positive integer greater than 1.

12. The second node device according to claim 11, wherein when the type of the physical channel carrying the first bit block is the first type, the first bit block is sent in a first time sub-window group in the first time pool, a reference symbol group is used for determining the first time sub-window group, and the reference symbol group depends on whether the first time pool overlaps the reference time domain resource set.

13. The second node device according to claim 12, wherein the reference symbol group is used for determining a target symbol group in the first time pool, and the first time sub-window group comprises parts or all of symbols outside the target symbol group in the first time pool.

14. The second node device according to any one of claims 8 to 11, wherein the first signaling is used for determining the type of the physical channel carrying the first bit block.

15. A method used in a first node for wireless communication, comprising:
receiving a first information block; receiving first signaling, and
sending a first bit block in a first time window, or foregoing sending the first bit block in the first time window,
wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

16. The method according to claim 15, wherein the physical channel carrying the first bit block is a PUSCH, the first type is type B or applies transport block processing over multiple slots, and the second type is type A; symbol positions occupied by a PUSCH of type A on each slot of multiple slots are the same; a PUSCH of type B is allocated with one or more nominal repetitions; and in a PUSCH applying transport block processing over multiple slots, a transport block size is determined according to sizes of time-frequency resources in the multiple slots.

17. The method according to claim 15 or 16, wherein at least one symbol in the reference time domain resource set is configured as a DL symbol by a higher layer parameter.

18. The method according to any one of claims 15 to 17, wherein the first signaling is used for determining a first time pool, the first time pool comprises N time windows, the first time window is any time window of the N time windows, and N is a positive integer greater than 1.

19. The method according to claim 18, wherein when the type of the physical channel carrying the first bit block is the first type, the first bit block is sent in a first time sub-window group in the first time pool, a reference symbol group is used for determining the first time sub-window group, and the reference symbol group depends on whether the first time pool overlaps the reference time domain resource set.

20. The method according to claim 19, wherein the reference symbol group is used for determining a target symbol group in the first time pool, and the first time sub-window group comprises parts or all of symbols outside the target symbol group in the first time pool.

21. The method according to any one of claims 15 to 18, wherein the first signaling is used for determining the type of the physical channel carrying the first bit block.

22. A method used in a second node for wireless communication, comprising:
sending a first information block; sending first signaling; and
receiving a first bit block in a first time window, or foregoing receiving the first bit block in the first time window,
wherein the first information block is used for determining a reference time domain resource set, the first signaling is used for determining the first time window, and the first time window belongs to the reference time domain resource set; the first bit block comprises at least one bit, whether the first bit block is sent in the first time window depends on a type of a physical channel carrying the first bit block, the type of the physical channel carrying the first bit block is one of a first type or a second type, and the first type and the second type are different; when the type of the physical channel carrying the first bit block is a first type, the first bit block is sent in the first time window; and when the type of the physical channel carrying the first bit block is a second type, the sending of the first bit block is foregone in the first time window.

23. The method according to claim 22, wherein the physical channel carrying the first bit block is a PUSCH, the first type is type B or applies transport block processing over multiple slots, and the second type is type A; symbol positions occupied by a PUSCH of type A on each slot of multiple slots are the same; a PUSCH of type B is allocated with one or more nominal repetitions; and in a PUSCH applying transport block processing over multiple slots, a transport block size is determined according to sizes of time-frequency resources in the multiple slots.

24. The method according to claim 22 or 23, wherein at least one symbol in the reference time domain resource set is configured as a DL symbol by a higher layer parameter.

25. The method according to any one of claims 22 to 24, wherein the first signaling is used for determining a first time pool, the first time pool comprises N time windows, the first time window is any time window of the N time windows, and N is a positive integer greater than 1.

26. The method according to claim 25, wherein when the type of the physical channel carrying the first bit block is the first type, the first bit block is sent in a first time sub-window group in the first time pool, a reference symbol group is used for determining the first time sub-window group, and the reference symbol group depends on whether the first time pool overlaps the reference time domain resource set.

27. The method according to claim 26, wherein the reference symbol group is used for determining a target symbol group in the first time pool, and the first time sub-window group comprises parts or all of symbols outside the target symbol group in the first time pool.

28. The method according to any one of claims 22 to 25, wherein the first signaling is used for determining the type of the physical channel carrying the first bit block.
